# EUROPEAN PATENT SPECIFICATION

(11) **EP 0 931 121 B1**
(45) Date of publication and mention of the grant of the patent: **03.05.2000**
(21) Application number: 97910401.5
(22) Date of filing: 29.09.1997
(51) Int. Cl.: C10G 11/18

(54) **REACTOR RISER OF A FLUID CATALYTIC CRACKING PLANT**
STEIGHRORHREAKTOR EINES FCC-ANLAGE
COLONNE DE MONTEE DE REACTEUR D'UNE INSTALLATION DE CRAQUAGE CATALYTIQUE FLUIDE

(30) Priority: 30.09.1996 EP 96202726
(43) Date of publication of application: 28.07.1999
(73) Proprietor: SHELL INTERNATIONALE RESEARCH MAATSCHAPPIJ B.V., 2596 HR Den Haag (NL)
(72) Inventor: DRIES, Hubertus, Wilhelmus, Albertus, NL-1031 CM Amsterdam (NL)
(74) Representative: Hulsebos, Antoon
(86) International application number: EP9705398
(87) International publication number: WO9814533

(56) References cited:
- US-A- 2 763 516
- US-A- 3 353 925

## Description

The present invention relates to a reactor riser of a fluid catalytic cracking plant. Such a reactor riser has an axial passageway extending between an inlet end for receiving hydrocarbonaceous feed and catalyst particles and an outlet end for discharging effluent and catalyst particles.

In addition to the reactor riser, a fluid catalytic cracking plant may include a reactor vessel into which the outlet end of the reactor riser debouches, and a regenerator vessel. During normal operation, regenerated catalyst particles and hydrocarbonaceous feed are supplied to the inlet end of the reactor riser. In the riser the feed is vaporized, and a dispersion of catalyst particles in a gaseous mixture of feed is formed. In the reactor riser catalytic cracking of the feed takes place, and a gaseous mixture of feed and product is obtained. Because the composition of the gaseous mixture of feed and products changes along the riser reactor, this mixture will be referred to as 'effluent'. The dispersion of catalyst particles in the gaseous effluent leaves the reactor riser at a temperature of between 500 and 540 °C or higher. The dispersion is passed into a separator system in the reactor vessel where gaseous effluent is separated from catalyst particles. The gaseous effluent is removed from the upper end of the reactor vessel, and the catalyst particles are discharged to the lower part of the reactor vessel where they are stripped. Stripped catalyst particles are passed to the regenerator vessel where coke deposited on the particles during cracking is burnt-off at a high temperature to obtain combustion products and regenerated catalyst. The combustion products are removed from the upper end of the regenerator vessel and regenerated catalyst is re-used. Normally the reactor riser is vertical.

In the reactor riser the average linear gas velocity is in the range of from 10 to 30 m/s and the average linear velocity of the catalyst particles is up to 25 m/s. The catalyst particles will move substantially con-currently with the gaseous reaction mixture, and it is preferred that there is little slip between gas and particles.

As the cracking reaction takes place on the catalyst particles, good contacting between the gaseous effluent and the catalyst particles is essential for a sufficient degree of conversion.

To improve the contacting between the catalyst particles and the gaseous effluent, it is proposed in USA patent specification No. 3 353 925 to provide the reactor riser with a plurality of contacting devices arranged axially spaced apart in the axial passageway of the reactor riser. The known contacting devices comprise an annular flat mixing element. Consequently at a contacting device, the passage has a diameter which is smaller than the diameter of the axial passageway. Thus, the further the annular mixing element penetrates into the passage, the smaller the diameter (and consequently the area) of the passage becomes. This has an adverse effect on the pressure drop over the contacting device, because the smaller the area of the passage, the larger the pressure drop becomes.

Applicant now considers a contacting device which has a relatively large penetration depth, whilst the pressure drop over the contacting device is maintained at an acceptable level.

To this end, the reactor riser of a fluid catalytic cracking plant according to the present invention, has an axial passageway extending between an inlet end for receiving hydrocarbonaceous feed and catalyst particles and an outlet end for discharging effluent and catalyst particles, and is provided with a plurality of contacting devices arranged axially spaced apart in the axial passageway, wherein each contacting device comprises a mixing element having the shape of a segment of arc.

An advantage of the mixing element of the present invention is that it can easily be build into the axial passageway of an existing reactor riser.

The invention will now be described by way of example in more detail with reference to the accompanying drawings, wherein
Figure 1 shows schematically a longitudinal section of part of the reactor riser according to the present invention; and
Figure 2 shows section II-II of Figure 1.

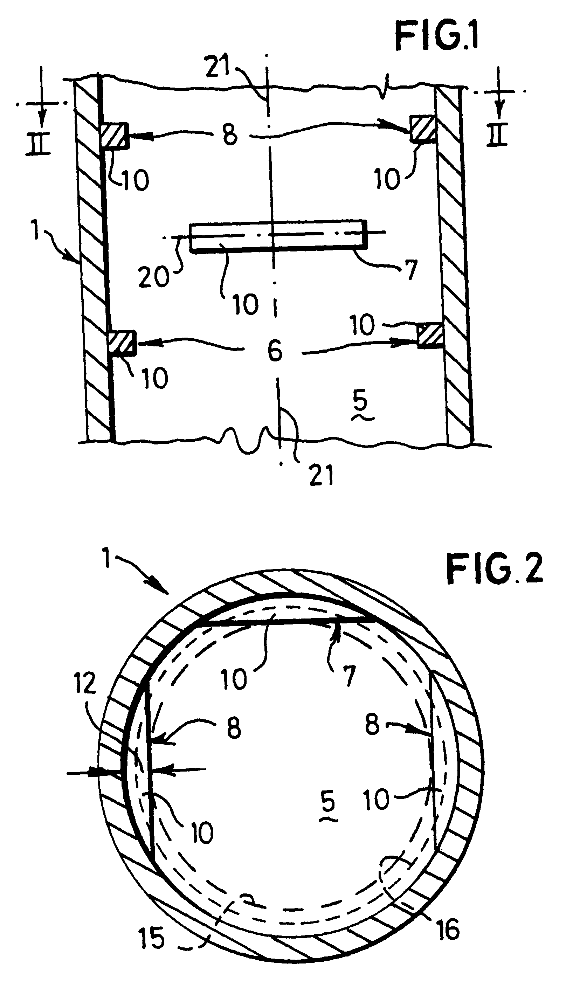

Reference is now made to Figures 1 and 2. The reactor riser is designated with reference numeral 1. For the sake of clarity any lining on the wall 2 of the reactor riser 1 is not shown. Moreover, because a fluid catalytic cracking plant is well known, the remainder of the plant will not be shown.

The normally vertical reactor riser 1 has an axial passageway 5 extending between an inlet end (not shown) for receiving hydrocarbonaceous feed and catalyst particles and an outlet end (not shown) for discharging effluent and catalyst particles.

The reactor riser 1 is provided with a plurality of contacting devices 6, 7 and 8. The contacting devices 6, 7 and 8 are arranged axially spaced apart in the axial passageway 5. Each contacting device 6, 7 and 8 comprises a flat mixing element 10 having the shape of a segment of arc and a rectangular cross-section. The penetration depth of the flat mixing element 10 is the rise 12 of the segment of arc. The flat mixing element 10 can be connected to the wall of the reactor riser 1 in any known way.

As can be seen, the contacting device 7 has only one flat mixing element 10, whereas each of the contacting elements 6 and 8 comprises a pair of opposite flat mixing elements 10. Suitably the number of mixing elements is not more than 4. The axial spacing of the contacting devices is not critical, usually it should be larger than the diameter of the axial passageway 5.

During normal operation a dispersion of catalyst particles in gaseous effluent is passed through the axial passageway 5. The flow of the dispersion is disturbed by the flat mixing elements 10, and consequently an efficient mixing of catalyst particles and gaseous effluent in obtained.

In Figure 2 the dashed circle referred to with reference numeral 15 represents the inner periphery of an annular flat mixing element according to the prior art which has the same penetration depth as the flat mixing element of the present invention. It will be clear that the area of the passage pertaining to the known contacting device (which corresponds to the area enclosed by the circle 15) is much smaller that the area of the passage pertaining to the contacting device according to the present invention. Consequently for the same penetration depth the contacting device according to the present invention will give a much smaller pressure drop than the known contacting device.

The dashed circle referred to with reference numeral 16 represents the inner periphery of an other annular flat mixing element according to the prior art. The diameter of circle 16 is so selected that the area of the passage pertaining to the known contacting device (which corresponds to the area enclosed by the circle 16) is the same as the area of the passage pertaining to the contacting device according to the present invention. It will be clear that the known annular flat mixing element has a much smaller penetration depth than the flat mixing element of the present invention.

The flat mixing elements of adjacent contacting devices can be arranged directly above another. However, suitably the flat mixing element(s) of a contacting device is (are) arranged staggered with respect to the flat mixing element(s) of an adjacent contacting device, and as shown in the Figures, the flat mixing elements of adjacent contacting devices are arranged perpendicular to each other. The angle need not be 90°, it can be any acute angle.

In addition, the flat mixing element(s) can further include a lip pointing inwards.

The central planes 20 of the flat mixing elements 10 as shown in the Figures are arranged perpendicular to the central longitudinal axis 21 of the reactor riser 1. In an alternative embodiment the mixing elements can be arranged tilted with respect to the central longitudinal axis 21 of the reactor riser 1. For example the angle between a central plane and the central longitudinal axis is between 5° and 20°.

The flat mixing elements of the present invention as discussed with reference to the drawings have a rectangular cross-section. Alternatively, the cross-section is can be triangular, wherein the apices of the triangles of each cross-section are located on a straight line.

## Claims

1. Reactor riser of a fluid catalytic cracking plant, which reactor riser has an axial passageway extending between an inlet end for receiving hydrocarbonaceous feed and catalyst particles and an outlet end for discharging effluent and catalyst particles, which reactor riser is provided with a plurality of contacting devices arranged axially spaced apart in the axial passageway, wherein each contacting device comprises a mixing element having the shape of a segment of arc.

2. Reactor riser according to claim 1, wherein each contacting device comprises a pair of opposite mixing elements.

3. Reactor riser according to claim 1 or 2, wherein the mixing element(s) of a contacting device is (are) arranged staggered with respect to the mixing element(s) of an adjacent contacting device.

4. Reactor riser according to any one of the claims 1-3, wherein the mixing element(s) further include a lip pointing inwards.

5. Use of a reactor riser according to any of claims 1-4 in a fluid catalytic cracking plant, wherein catalyst particles and a hydrocarbonaceous feed move substantially con-current through the vertically positioned reactor riser.

6. Method to retrofit an existing reactor riser by building in a plurality of mixing elements into said riser and obtaining a reactor riser according to any one of claims 1-4.

## Patentansprüche

1. Reaktorriser einer fluidkatalytischen Crackanlage, welcher Reaktorriser einen axialen Durchlaß hat, der sich zwischen einem Einlaßende zur Aufnahme einer kohlenwasserstoffhältigen Aufgabe und Katalysatorpartikeln und einem Auslaßende zur Abgabe eines Abzugsstromes und der Katalysatorpartikel erstreckt, welcher Reaktorriser mit einer Mehrzahl von Kontaktiereinrichtungen ausgestattet ist, die mit gegenseitigem Axialabstand in dem axialen Durchlaß angeordnet sind, wobei jede Kontaktiereinrichtung ein Mischelement mit der Form eines Bogensegmentes aufweist.

2. Reaktorriser nach Anspruch 1, bei welchem jede Kontaktiereinrichtung ein Paar einander gegenüberliegender Mischelemente umfaßt.

3. Reaktorriser nach Anspruch 1 oder 2, bei welchem das bzw. die Mischelement(e) einer Kontaktiereinrichtung bezüglich des bzw. der Mischelemente(s) einer benachbarten Kontaktiereinrichtung versetzt sind.

4. Reaktorriser nach einem der Ansprüche 1-3, bei welchem das bzw. die Mischelement(e) ferner eine nach innen zeigende Lippe aufweisen.

5. Verwendung eines Reaktorrisers nach einem der Ansprüche 1-4 in einer fluidkatalytischen Crackanlage, wobei Katalysatorpartikel und eine kohlenwasserstoffhältige Aufgabe sich im wesentlichen im Gleichstrom durch den vertikal angeordneten Reaktorriser bewegen.

6. Verfahren zum Umrüsten eines bestehenden Reaktorrisers durch Einbauen einer Mehrzahl von Mischelementen in den genannten Riser und Erzielen eines Reaktorrisers gemäß einem der Ansprüche 1-4.

## Revendications

1. Colonne montante de réacteur d'une installation de craquage catalytique fluide, laquelle colonne montante de réacteur comporte un passage axial s'étendant entre une extrémité d'entrée pour recevoir une alimentation hydrocarbonée et des particules de catalyseur et une extrémité de sortie pour décharger un effluent et des particules de catalyseur, laquelle colonne montante de réacteur est pourvue d'une série de dispositifs de mise en contact agencés axialement séparément dans le passage axial, chaque dispositif de mise en contact comprenant un élément de mélange ayant la forme d'un segment d'arc.

2. Colonne montante de réacteur suivant la revendication 1, dans laquelle chaque dispositif de mise en contact comprend une paire d'éléments de mélange opposés.

3. Colonne montante de réacteur suivant l'une ou l'autre des revendications 1 et 2, dans laquelle le(s) élément(s) de mélange d'un dispositif de mise en contact est (sont) agencé(s) de façon étagée par rapport à l'élément ou aux éléments de mélange d'un dispositif de mise en contact adjacent.

4. Colonne montante de réacteur suivant l'une quelconque des revendications 1 à 3, dans laquelle le(s) élément(s) de mélange comprennent de plus une lèvre orientée vers l'intérieur.

5. Utilisation d'une colonne montante de réacteur suivant l'une quelconque des revendications 1 à 4 dans une installation de craquage catalytique fluide, dans laquelle les particules de catalyseur et une alimentation hydrocarbonée se déplacent sensiblement de façon concurrente dans la colonne montante de réacteur positionnée verticalement.

6. Procédé pour réadapter une colonne montante de réacteur par l'incorporation d'une série d'éléments de mélange dans ladite colonne montante et l'obtention d'une colonne montante de réacteur suivant l'une quelconque des revendications 1 à 4.
